# EUROPÄISCHE PATENTANMELDUNG

(11) **EP 0 537 873 A1**
(43) Veröffentlichungstag der Anmeldung: **21.04.1993**
(21) Anmeldenummer: 92250298.4
(22) Anmeldetag: 13.10.1992
(51) Int. Cl.: B60L 11/02, B60L 7/14, B60L 1/00

(54) **Nicht-spurgebundenes Fahrzeug mit Elektromotor-Antrieb und Nutzbremsung**

(30) Priorität: 16.10.1991 DE 4134239; 23.12.1991 DE 4142863
(71) Anmelder: MANNESMANN Aktiengesellschaft, D-40027 Düsseldorf (DE)
(72) Erfinder: Adler, Uwe, W-8720 Schweinfurt (DE); Drexl, Hans-Jürgen, W-8724 Schonungen/Mbg (DE); Lutz, Dieter, W-8720 Schweinfurt (DE); Nagler, Franz, W-8729 Ottendorf (DE); Ochs, Martin, W-8720 Schweinfurt (DE); Schiebold, Stefan, W-8720 Schweinfurt (DE); Schmidt-Brücken, Hans-Joachim, W-8721 Geldersheim (DE); Thieler, Wolfgang, W-8728 Hassfurt (DE); Wagner, Michael, W-8721 Niederwerrn (DE); Westendorf, Holger, W-8721 Hambach (DE); Wychnanek, Rainer, W-8721 Madenhausen (DE)
(74) Vertreter: Meissner, Peter E., Dipl.-Ing.

(57) **Zusammenfassung**

Bei einem Fahrzeug (2) mit Verbrennungsmotor-Generator-Einheit (10) werden zum Antreiben des Fahrzeugs dessen Räder (4a...4d) mittels direkt damit gekoppelter Elektromotoren (6a...6d) über eine Leistungselektronik-Einheit (8) gespeist. Die elektrische Energie kann auch von einem Akkumulator (11) entnommen sein. Ein Bremspedal (14) besitzt einen Weggeber (16), der mit einer elektronischen Steuerung (12) der Fahrzeugkomponenten gekoppelt ist. Abhängig vom Bremspedalweg erfolgt die Einstellung der Bremskraft durch die Steuerung (12). Hierzu werden die Elektromotoren (6a...6d) als Generatoren betrieben. Hierdurch wird eine Bremswirkung erzielt. Die dabei gewonnene elektrische Energie wird entweder in dem Akkumulator (11) eingespeichert, oder aber neben Aggregaten, z. B. einem Lüfter, einem Klimaanlage-Kompressor oder dergleichen zugeführt. Auch kann die Energie zusätzlich vorgesehenen Wirbelstrom-Bremsen (18a...18d) an den einzelnen Rädern (4a...4d) zugeführt werden.

## Beschreibung

Die Erfindung betrifft ein nicht-spurgebundenes Fahrzeug mit mindestens einem Elektromotor, der das Fahrzeug antreibt und über eine Leistungselektronik-Einheit von einem elektrischen Generator und/oder einem elektrischen Speicher mit Strom gespeist wird gemäß dem Oberbegriff des Patentanspruchs 1.

Üblicherweise sind Kraftfahrzeuge, also Personenkraftwagen, Lastkraftwagen, Busse und dergleichen, mit einem Verbrennungsmotor ausgestattet. In jüngerer Zeit sind auch Kraftfahrzeuge mit elektromotorischem Antrieb entwickelt worden, darunter auch sogenannte Fahrzeuge mit Solarantrieb, d.h. Fotozellen, die den Strom für den Antriebs-Elektromotor liefern.

Elektrofahrzeuge mit reinem Batteriebetrieb sind jedoch nur in sehr engen Grenzen einsetzbar, da der elektrische Speicher (Akkumulator) sehr voluminös und schwer ist, wenn man die speicherbare Energie und entsprechend die Fahrleistungen berücksichtigt.

In jüngerer Zeit wurde ein Antriebskonzept vorgeschlagen, bei dem ein Verbrennungsmotor mit einem elektrischen Generator gekoppelt ist, der Elektromotoren speist, welche direkt mit den angetriebenen Rädern des Fahrzeugs gekoppelt sind. Sieht man dazu noch einen Speicher, z.B. ein Schwungrad, als mechanischen Energiespeicher vor, so kann man die kurzfristig zur Verfügung zu stellende Beschleunigungsleistung aus dem Energiespeicher abrufen, während der Verbrennungsmotor mit mehr oder weniger konstanter Drehzahl arbeitet, um laufend Energie in den Schwungrad-Energiespeicher einzuspeisen.

Fahrzeuge mit elektromotorischem Antrieb haben ein grundsätzlich anderes Fahrverhalten als Fahrzeuge mit Verbrennungsmotor-Antrieb. Während bei Verbrennungsmotoren nur ein sehr geringer Drehzahlbereich mit relativ hohem Drehmoment zur Verfügung steht, ist die Änderung des Drehmoments beim Elektromotor weniger stark von der Drehzahl abhängig.

Bei einem Fahrzeug mit Verbrennungsmotor-Antrieb nimmt die Drehzahl des Verbrennungsmotors bei minimaler Kraftstoffzufuhr bis auf einen geringen Wert ab oder bei vollständig abgeschalteter Kraftstoffzufuhr wird ein der mechanischen Reibung des Verbrennungsmotors entsprechendes Bremsmoment erzeugt. Naturgemäß sind bei der Abbremsung eines Fahrzeugs größere Bremskräfte erforderlich, die über ein Bremspedal aufgebracht und gegebenenfalls über einen Bremskraftverstärker verstärkt werden. Die Energie wird an den Bremsscheiben größtenteils durch Reibung in Wärme umgesetzt. Bei Schienenfahrzeugen mit elektromotorischem Antrieb ist es üblich, den Elektromotor beim Bremsvorgang als Generator zu betreiben, um die dann induzierte elektrische Energie über Widerstände als Heizenergie zu nutzen. Bei nicht-spurgebundenen Fahrzeugen, die mit einem elektromotorischem Antrieb ausgestattet sind, kann man ebenfalls an eine derartige Nutzbremsung denken. Allerdings sind damit die Möglichkeiten eines elektromotorischen Antriebs noch nicht ausgeschöpft, da bei einem modernen elektromotorischen Antrieb üblicherweise eine Steuerungselektronik und eine Leistungselektronik vorhanden sind, die eine über die Nutzung der Bremsenergie als Heizenergie hinausgehende Nutzung der beim Bremsvorgang anfallenden Energie gestatten.

In der gattungsbildenden DE 37 25 620 A1 wird eine Antriebs- und Bremskonzeption für ein Fahrzeug mit Verbrennungsmotor und konventionellen mechanischen Bremsen offenbart, bei dem der Verbrennungsmotor einen elektrischen Generator antreibt, der elektrische Fahrmotoren, die mit den Antriebsrädern des Fahrzeugs gekoppelt sind, mit Energie versorgt. Außerdem ist das Fahrzeug mit einem wahlweise als Elektromotor oder Generator arbeitenden Schwungradspeicher ausgestattet. Bei Betätigung des Bremspedals verteilt die elektronische Steuerung des Fahrzeugs die abgeforderte Bremskraft nach einem vorgegebenen Kennfeld auf das mechanische Bremssystem und die elektrischen Fahrmotoren, die dann als elektrische Generatoren arbeiten und den erzeugten Strom dem Schwungradspeicher zuleiten. Die damit verbundene Nutzung der Bremsenergie findet aber nur dann statt, wenn der Ladezustand des Schwungradspeichers überhaupt eine Aufnahme derartiger Nutzenergie gestattet.

Der Erfindung liegt die Aufgabe zugrunde, ein Fahrzeug der gattungsgemäßen Art anzugeben, bei dem im Hinblick auf einen möglichst geringen Energieverbrauch ebenso wie im Hinblick auf eine möglichst effiziente Ausnutzung gegebener Bauelemente des Fahrzeugs ohne nennenswerten zusätzlichen Aufwand die in einem Fahrzeug in bestimmten Phasen anfallende Energie wirksam genutzt wird.

Diese Aufgabe wird bei einem Fahrzeug der genannten Art gemäß Anspruch 1 dadurch gelöst, daß die Steuerung die von dem Elektromotor im Generatorbetrieb gelieferte Energie über die Leistungselektronik-Einheit als Nutzenergie bereitstellt und diese lediglich zu einem Teil einem elektrischen Speicher zuführt, sofern ein solcher vorgesehen ist, im übrigen aber diese Energie unabhängig von der zu Zwecken des Fahrzeugantriebs erfolgenden Speicherung nutzt
a) zum Antrieb von Nebenaggregaten, insbesondere Lüfter, Klimaanlagenkompressor, Kühlmittelpumpe und dergleichen, und/oder
b) zum Heizen des Fahrgastraums und/oder
c) zum Versorgen elektrischer Verbraucher wie Licht, heizbare Heckscheibe oder dergleichen.

Vorteilhafte Weiterbildungen der Erfindung sind in den Unteransprüchen 2 bis 6 angegeben.

Der erfindungsgemäße Vorschlag geht also über das von Schienenfahrzeugen bekannte Prinzip der Nutzung der beim Bremsvorgang anfallenden Energie deutlich hinaus und sieht ein exaktes Erfassen eines schiebenden Zustands des Fahrzeugs vor, um in diesem Fall über die bereits bei dem Fahrzeug vorhandene Leistungselektronik-Einheit elektrische Energie aus den dann als Generatoren arbeitenden Elektromotoren abzunehmen, um sie gezielt als Nutzenergie für Verbraucher im Fahrzeug verfügbar zu machen.

Auch gegenüber der DE 37 25 620 A1 ergibt sich ein wesentlicher Fortschritt, da die dort beschriebene Bremskonzeption eine Energiespeicherung nur für den Zweck des Fahrzeugantriebs vorsieht und bei geladenem Speicher überhaupt keine Umwandlung der Bremsenergie in Nutzenergie zuläßt.

Die Erfindung läßt sich mit besonders guter Wirkung bei einem Fahrzeug einsetzen, bei welchem für den Antrieb eine Verbrennungsmotor-Generator-Einheit vorgesehen ist. Wenn in Verbindung mit einer solchen Verbrennungsmotor-Generator-Einheit ein elektrischer Speicher (Akkumulator) verfügbar ist, aus dem auch für den Fahrzeugantrieb Energie abgezogen werden kann, so schafft die Erfindung ein Mittel, mit dem der gesamte Energiehaushalt des Fahrzeugs optimierbar ist.

Bei einem Fahrzeug mit der oben erwähnten Verbrennungsmotor-Generator-Einheit sieht die Erfindung vor, daß zum Heizen des Fahrgastraums elektrische Widerstände in den Kühlkreislauf des Verbrennungsmotors integriert sind. Damit werden im wesentlichen zwei wichtige Ziele erreicht: Wenn keine Beheizung des Fahrgastraums erforderlich ist, wird der Verbrennungsmotor, der bei einem Fahrzeug der hier in Rede stehenden Art, bei relativ niedrigen Drehzahlen arbeitet, rasch auf die optimale Betriebstemperatur gebracht, wobei außerdem die beim Bremsvorgang anfallende elektrische Energie durch die Widerstände in Wärme umgesetzt und diese gut abgeführt wird. Da sich die Widerstände im Kühlkreislauf befinden, wird die beim Bremsvorgang anfallende Wärmeenergie gut abgeleitet. Bei niedrigen Außentemperaturen, wenn der Fahrgastraum geheizt werden muß, wird die Wärme aus dem Kühlkreislauf des Verbrennungsmotors abgeleitet. Wenn man nun daran denkt, daß der Verbrennungsmotor beispielsweise im Stadtbetrieb nur intermittierend arbeitet, hauptsächlich aber die Antriebsenergie aus einem Akkumulator entnommen wird, so kann dennoch eine wirksame Beheizung des Fahrgastraums durch die anfallende Bremsenergie zur Verfügung gestellt werden.

Wenn bei einem Fahrzeug mit Akkumulator-Energiequelle für den Antrieb der Akkumulator vollständig aufgeladen ist und der Verbrennungsmotor im Stadtverkehr abgeschaltet ist, so wird die bei jedem Beschleunigungsvorgang benötigte Energie aus dem Akkumulator abgezogen. Bei einem Bremsvorgang wird die dann durch den Generatorbetrieb des Antriebs-Elektromotors gewonnene Energie zu einem Teil in den Akkumulator zurückgespeichert, soweit dies auf Grund der Ladecharakteristik des Speichers möglich ist, während ein anderer Teil der Energie direkt für bestimmte Verbraucher, z.B. die beheizbare Heckscheibe, Beleuchtung und dergleichen, genutzt werden kann.

Bei den bisher üblichen Bremspedalen wirkt auf einen Bremskraftverstärker ein Gestänge, so daß abhängig von dem Pedalweg eine mehr oder weniger starke Bremskraft auf die Bremsen der Räder ausgeübt wird. Wenn man erfindungsgemäß einen Verzögerungssensor als vorzugsweise mit dem Bremspedal gekoppelten Stellungssensor (Weggeber) ausbildet, insbesondere als Potentiometer, der an die Steuerung des Fahrzeugs angeschlossen ist, so läßt sich mit Hilfe der Steuerung in Abhängigkeit der Bremspedalstellung eine vergleichsweise optimierte. Bremskraftverteilung im Sinne einer optimalen Verkürzung des Bremswegs erreichen, wie nachfolgend noch näher erläutert wird.

Außer der gezielten Abbremsung des Fahrzeugs durch Betätigung eines Bremspedals kommt für die Gewinnung von nutzbarer elektrischer Energie aber auch noch ein schiebender Zustand des Fahrzeugs in Betracht, der allein durch Loslassen des Fahrpedals ("Gaspedals") erreicht wird. Zu diesem Zweck kann erfindungsgemäß vorgesehen sein, daß der Verzögerungssensor einen Drosselklappenstellungssensor aufweist, der an die elektronische Steuerung angeschlossen ist.

Insbesondere bei höheren Geschwindigkeiten und hoher Fahrzeugmasse erfolgt die Abbremsung des Fahrzeugs durch Betreiben der Antriebs-Elektromotoren als Generatoren nur mit einem begrenzten Bremsmoment bzw. mit einer begrenzten Bremskraft. Nun gibt es aber bekanntlich eine ideale Bremskraftverteilung zwischen Vorder- und Hinterachse als Funktion der Abbremsung. Eine ideale Bremskraftverteilung ermöglicht den kürzesten Bremsweg. Der kürzeste Bremsweg ist eine nicht-lineare Funktion der Abbremsung und definiert in etwa den Grenzbereich zwischen Bremsstabilität und Bremsinstabilität. Durch den Generatorbetrieb beim Bremsvorgang wird dieser Grenzwert in aller Regel noch nicht erreicht, d.h. das auf die Räder aufgebrachte Bremsmoment ist nicht so stark, daß die Räder auch nur annähernd zum Blockieren neigen, trockene Fahrbahn vorausgesetzt. Ein sehr kurzer Bremsweg setzt aber voraus, daß die Räder so weit abgebremst werden, daß sie fast blockieren.

Um nun die durch Schalten des Elektromotors als Generator erreichbare Bremsenergie noch zu erhöhen, sieht die Erfindung vor, daß zusätzlich zu einer (zur Sicherheit vorhandenen) mechanisch-hydraulischen Bremsanlage eine elektrische Wirbelstrom-Bremsanlage vorgesehen ist, die bei einem Bremsvorgang von dem im Generatorbetrieb arbeitenden Elektromotor gespeist wird. Mithin stehen bei dieser Variante insgesamt drei Möglichkeiten zur Verfügung, eine Abbremsung des Fahrzeugs zu bewirken: 1. erfolgt eine Abbremsung durch Schalten des Antriebs-Elektromotors als Generator, 2. kann eine Abbremsung durch eine (übliche) mechanisch-hydraulische Bremsanlage erfolgen, und 3. wird bei einem Bremsvorgang die elektrische Wirbelstrombremse mit Strom gespeist.

Das Speisen der elektrischen Wirbelstrombremse beim Bremsvorgang ist hier deshalb besonders günstig, weil der zum Speisen der Wirbelstrombremse benötigte elektrische Strom von dem dann als Generator arbeitenden Elektromotor geliefert wird.

Die elektrische Wirbelstrombremse hat außerdem den beträchtlichen Vorteil, daß ein an das Fahrzeug gekoppelter Anhänger wirksam abgebremst werden kann, ohne daß dies - wie bisher - ausschließlich mittels mechanischer Bremsung erfolgen muß.

Wie oben angedeutet, kann durch die Abbremsung des Fahrzeugs aufgrund des Generatorbetriebs der Elektromotoren vielfach keine so hohe Bremskraft erzeugt werden, um den kürzesten Bremsweg zu gewährleisten. Auch mit Hilfe einer zusätzlichen Wirbelstrombremse wird möglicherweise noch nicht genügend Bremskraft bereitgestellt. Deshalb ist als Sicherungsmaßnahme gemäß der Erfindung vorgesehen, daß gleichsam als Reserve noch eine grundsätzlich konventionell ausgebildete mechanisch-hydraulische Bremsanlage vorhanden ist. Hierbei ergibt sich nun zunächst das Problem, daß eine Bremsung mit einem einzigen Bremspedal ausgeführt werden muß, da dies allgemein üblich ist und dem Fahrer auch aus Sicherheitsgründen kein kompliziertes Bremsbetätigungssystem zugemutet werden könnte.

Im Hinblick darauf sieht ein zweiter Aspekt der Erfindung, der selbständige Bedeutung hat, für ein nicht-spurgebundenes Fahrzeug, insbesondere für ein Fahrzeug nach einem der Ansprüche 1 bis 6 eine Bremseinrichtung gemäß Anspruch 7 mit einer elektrisch oder elektronisch gesteuerten Bremsanlage und mit einem elektrischen Bremspedal-Weggeber vor. Wie oben bereits angedeutet, wird durch den Weggeber eindeutig festgelegt, welche Bremskraft von dem Fahrer gewünscht ist, wobei hierzu vorteilhafterweise noch ein mechanischer Widerstand in Form einer Feder mit dem Bremspedal gekoppelt sein sollte. Wenn der Fahrer das Bremspedal nur etwas durchdrückt, erfolgt eine schwache Bremsung. Bis zu einer gegebenen Sollstellung kann dann die Bremskraft zunehmend gesteigert werden, und bei einem bestimmten Bremspedalweg ergibt sich dann die größte Bremskraft, die sich mit Hilfe der Steuerung so einstellen läßt, daß der kürzeste Bremsweg erreicht wird. Um nun die mechanisch-hydraulische Bremsanlage mit dem gleichen Bremspedal aktivieren zu können wie die elektrische bzw. elektronische Bremsung des Fahrzeugs, schlägt die Erfindung unter dem zweiten Aspekt vor, daß die Bremseinrichtung mechanisch mit einem Bremskraftverstärker einer mechanisch-hydraulischen Bremsanlage gekoppelt ist, wobei der Bremspedal-Weggeber auf einen Bremspedal-Vorweg anspricht und für eine elektronisch gesteuerte Bremsmoment- oder Bremskrafteinstellung ein Führungssignal liefert, und im Anschluß an den Bremspedal-Vorweg die mechanisch-hydraulische Bremsanlage anspricht. Hierbei kann man vorteilhaft an dem Punkt des Übergangs zwischen Betätigung der elektronischen Bremse und der mechanisch-hydraulischen Bremse einen vom Fahrer taktil erfaßbaren Punkt, z.B. eine plötzlich einsetzende Vergrößerung des Pedalwiderstands vorsehen. Dies gibt dem Fahrer die Möglichkeit zu einer ökonomischen Fahrweise, da er den Bereich der reinen Nutzbremsung von dem der "Misch"-Bremsung unterscheiden kann. Wenn das Bremspedal so weit durchgedrückt wird, daß es einer maximalen Bremsleistung durch die elektronischen Bremsanlagenkomponenten entspricht, wird bei einer noch weitergehenden Betätigung des Bremspedals schließlich die mechanisch-hydraulische Bremsanlage betätigt. Durch ein ausreichend starkes Durchtreten des Bremspedals kann man also auf jeden Fall eine gewünschte Bremsung erreichen, auch in dem Fall, daß einzelne Teile der elektronischen Anlage ausfallen sollten.

Damit der Fahrer das richtige Gefühl für das Ausmaß der auf die Räder einwirkenden Bremskraft erhält, sieht die Erfindung vor, daß an das Bremspedal ein wegabhängig arbeitendes mechanisches Widerstandselement gekoppelt ist. Dieses kann ein Hysterese-Element aufweisen, insbesondere ein Reibungsglied. Ein solches Hysterese-Element ist wichtig, um bei einem einmal eingestellten Bremspedalweg die dann erzielbare Bremskraft auch beizubehalten, wenn die auf das Bremspedal aufgebrachte Kraft etwas abnimmt.

Wie oben angegeben, kann zur Erzielung einer 100%igen Bremskraft möglicherweise eine mechanisch-hydraulische Bremseinrichtung notwendig sein, vorzugsweise wird erfindungsgemäß jedoch die rein elektronisch gesteuerte Anlage für 100 % des maximalen Bremsmoments ausgelegt, sofern dies die Leistungsmerkmale der als Generatoren betriebenen Elektromotoren unter Berücksichtigung der notwendigen achsweisen Bremskräfte für optimale Abbremsung zulassen, wobe u.U. eine starke Wirbelstrombremse vorgesehen sein kann.

Im folgenden werden Ausführungsbeispiele der Erfindung anhand der Zeichnungen näher erläutert. Es zeigen:
- Fig. 1: eine schematische Ansicht eines Kraftfahrzeugs mit elektromotorischem Einzelantrieb an vier Rädern,
- Fig. 2: eine schematische Ansicht einer Bremseinrichtung gem. der Erfindung,
- Fig. 3: die Abhängigkeit der vom Fahrer beim Betätigen des Bremspedals gespürten "Pseudobremskraft" von dem Bremspedalweg und
- Fig. 4: die Abhängigkeit der Bremskraft vom Bremspedalweg.

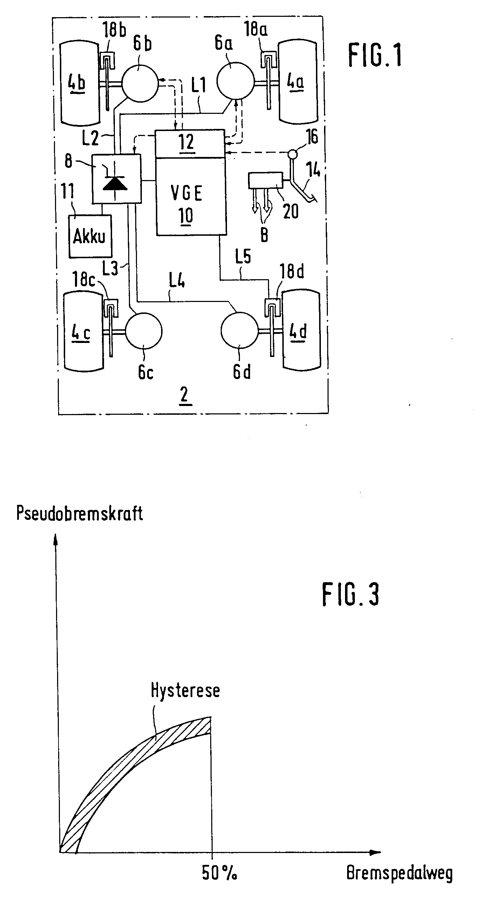

In Fig. 1 ist ein als ganzes mit 2 bezeichnetes Fahrzeug dargestellt, welches vier einzeln mittels Elektromotoren 6a...6d angetriebene Räder 4a...4d besitzt. Den Elektromotoren 6a, 6b wird von einer Verbrennungsmotor-Generator-Einheit (VGE) 10 über einen als Leistungselektronik-Einheit 8 ausgebildeten Energieverteiler Strom zugeführt, und zwar über Stromversorgungsleitungen L1, L2 für die Vorderräder 4a und 4b und Leitungen L3 und L4 für die Hinterräder 4c bzw. 4d.

Eine mit einem Mikroprozessor ausgestattete elektronische Steuerung 12 empfängt von den Elektromotoren 6a...6d Drehzahlsignale und empfängt außerdem von hier nicht dargestellten Sensoren weitere Signale, die kennzeichnend sind für den Betrieb der VGE 10, den Zustand der Elektromotoren 6a...6d, die Stellung eines nicht dargestellten Fahrhebels und dergleichen. Abhängig von der Stellung des Fahrhebels wird durch die VGE 10 eine bestimmte elektrische Leistung zur Verfügung gestellt, die über die Leistungselektronik-Einheit 8 nach Maßgabe der elektronischen Steuerung 12 an die Elektromotoren 6a...6d gegeben wird.

Als zusätzliche Energiequelle steht ein Akkumulator 11 zur Verfügung, aus dem Energie zum Beschleunigen des Fahrzeugs 2 wie auch für weitere Zwecke entnommen werden kann. Auch ist ein Speichern von Energie in dem Akkumulator 11 möglich. Hierzu wird der Ladezustand des Akkumulators 11 von einem Sensor erfaßt und der Steuerung 12 signalisiert, die gegebenenfalls die VGE 10 veranlaßt, elektrische Energie über die Leistungselektronik-Einheit 8 in den Akkumulator 11 einzuspeisen. Die VGE 10 besitzt einen Verbrennungsmotor, z.B. einen Otto-Motor, und einen elektrischen Generator mit vorzugsweise elektronischer Kommutierung.

Rechts in Fig. 1 ist schematisch ein Bremspedal 14 angedeutet, welches vom Fuß des Fahrers des Fahrzeugs 2 betätigt wird. Der Pedalweg des Pedals 14 wird von einem als Weggeber fungierenden Potentiometer 16 erfaßt, ein entsprechendes Signal wird von dem Potentiometer 16 an die Steuerung 12 geliefert. Mechanisch ist das Bremspedal 15 mit einer Bremszylinder/Bremskraftverstärker-Einheit 20 gekopelt, die in an sich bekannter Weise über Hydraulikleitungen B Bremskraft auf hier nicht dargestellte Bremszylinder an Bremsen der vier Räder 4a...4d überträgt.

Wenn das Fahrzeug 2 abgebremst wird, indem das Bremspedal 14 vom Fahrer ein Stück bewegt wird, wird dies von der Steuerung 12 über das Potentiometer 16 erfaßt. Die Steuerung 12 veranlaßt daraufhin, daß die Elektromotoren 6a...6d auf Generatorbetrieb umgeschaltet werden. Dadurch setzen die Elektromotoren 6a...6d der Drehbewegung der mit ihnen direkt gekoppelten Räder 4a...4d einen Widerstand entgegen. Über die Leitungen L1...L4 wird nun elektrische Energie von den Elektromotoren 4a...4d an die Leistungselektronik-Einheit 8 geliefert, von wo aus die Energie erfindungsgemäß verteilt wird. Ein Teil der beim Bremsbetrieb anfallenden elektrischen Energie wird in den Akkumulator 11 eingespeichert werden, sofern dessen Ladezustand dies erlaubt. Im übrigen wird die gewonnene Nutzenergie wahlweise in elektrische Widerstandselemente eingeleitet werden, in denen sie in Wärmeenergie zu Heizzwecken umgesetzt wird, sie kann Nebenaggregaten, z.B. einem Lüfter, einem Kompressor für eine Klimaanlage oder dergleichen, zugeleitet werden, oder die aus dem Bremsvorgang gewonnene elektrische Energie kann direkt elektrischen Verbrauchern zugeleitet werden, z.B. der Beleuchtungsanlage des Fahrzeugs.

Das Verteilen der Energie geschieht grundsätzlich durch die Steuerung 12. Hierzu ist die Steuerung 12 mit den verschiedenen Bauelementen und Baugruppen über Signalleitungen verbunden, die in Fig. 1 gestrichelt dargestellt sind. Aus Gründen der besseren Übersichtlichkeit sind die Signalleitungen zu den hinteren Elektromotoren 6c und 6d nicht dargestellt.

Zusätzlich zu der Abbremsung durch das Schalten der Elektromotoren 6a...6d auf Generatorbetrieb erfolgt eine weitere Aufbringung einer Bremskraft über schematisch dargestellte Wirbelstrombremsen 18a...18d, von denen jeweils eine mit einer Antriebswelle eines Elektromotors 6a...6d gekoppelt ist. Sie erhalten elektrischen Strom von der VGE 10 über Leitungen L₅, von denen lediglich eine dargestellt ist.

Aus den Drehzahlen der Elektromotoren 6a...6d kann die Steuerung 12 die momentane Längsverzögerung des Fahrzeugs ermitteln. Hieraus wiederum kann die Steuerung 12 eine Bremskraftverteilung für die vorderen Elektromotoren 6a und 6b und die vorderen Wirbelstrombremsen 18a und 18b ebenso berechnen, wie für die hinteren Elektromotoren 6c und 6d und die hinteren Wirbelstrombremsen 18c und 18d. Damit läßt sich eine optimale Bremswirkung erreichen, d.h. der kürzeste Bremsweg.

Wie aus der obigen Erläuterung hervorgeht, umfaßt die Bremseinrichtung zwei Elemente, nämlich einmal einen elektrischen oder elektronischen Bremspedal-Weggeber 16 z.B. in Form eines Potentiometers und außerdem die übliche Mechanik, um über einen Bremskraftverstärker und einen Bremszylinder die benötigte hydraulische Energie für die üblichen Scheibenbremsen oder Trommelbremsen an den einzelnen Fahrzeugrädern 4a...4d bereitzustellen.

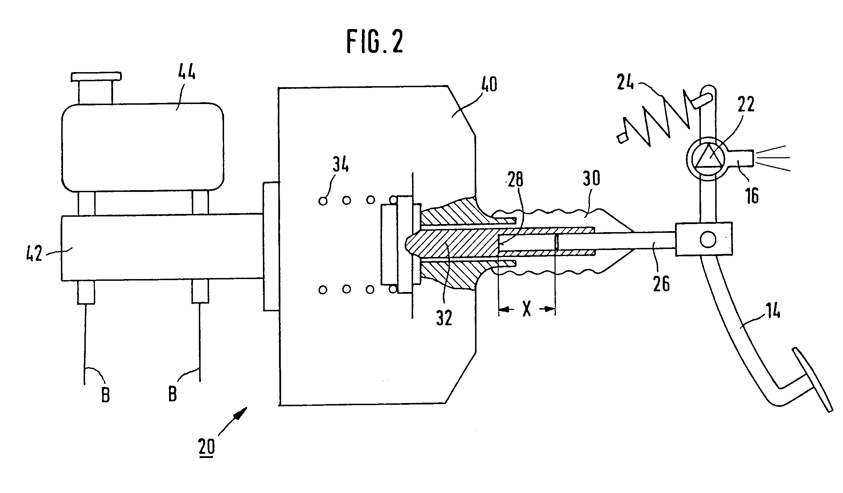

Fig. 2 zeigt den Aufbau einer Bremseinrichtung gemäß der Erfindung im einzelnen.

An das Bremspedal 14 ist im Bereich seines Drehpunkts ein Reibungsglieds 22 angebracht, außerdem ist dort ein als Potentiometer 16 ausgebildeter Weggeber vorhanden. Dieser Weggeber 16 liefert an die Steuerung (Fig. 1) ein Signal, welches kennzeichnend ist für das Ausmaß der Bremspedalbewegung. Um der Bremspedalbewegung einen Widerstand entgegenzusetzen, ist an dessen einem Ende eine Zugfeder 24 vorgesehen. Je weiter das Bremspedal durchgedrückt wird, desto größer ist die durch die Feder 24 bedingte Widerstandskraft. Hierdurch hat der Fahrer das Gefühl für eine "Pseudobremskraft".

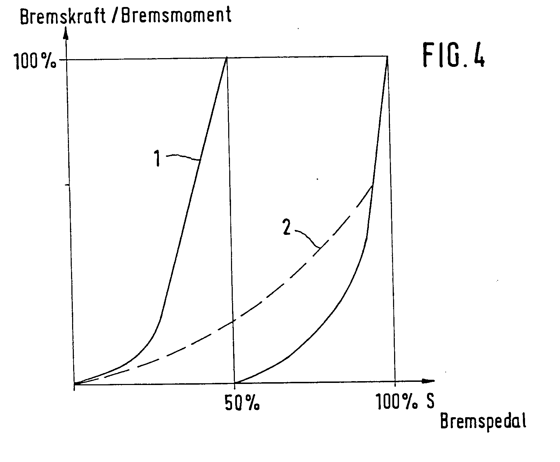

Fig. 3 zeigt die Abhängigkeit dieser "Pseudobremskraft" von dem Bremspedalweg. Bei einem Hub des Bremspedals von 50 % des Maximalhubs ist die Pseudobremskraft als degressive Kennlinie dargestellt, andere, stetig zunehmende Kennlinien (z.B. progressiv, linear) sind ebenfalls denkbar. Man erkennt die Fom einer Hysteresse. Nach dem Durchdrücken des Bremspedals um beispielsweise 50 % des maximalen Pedalwegs kann der Fahrer seinen Druck auf das Bremspedal wieder etwas vermindern, ohne daß dadurch die wirksame Bremskraft abnimmt. Dies wird durch das Reibungselement 22 erreicht, das verhindert, daß bei geringfügig nachlassendem Druck auf das Bremspedal dieses sich bereits wieder zurückbewegt.

In Fig. 2 ist mit dem Pedal 14 eine Kolbenstange 26 gekoppelt, die in eine Sackbohrung eines Stößels 32 eingreift. Das Pedal 14 kann entsprechend dem Betrag X der Kolbenstange 26 bewegt werden, ohne daß sich dabei der Stößel 32 bewegt. Der Stößel 32 ist von einem Balg 30 umgeben. Erst dann, wenn das vordere Ende der Kolbenstange 26 am Boden 28 der Sackbohrung anschlägt, wird durch das Pedal 14 Kraft auf den Stößel 32 aufgebracht. So kann beispielsweise in der oben angesprochenen Weise der sogenannte Bremspedal-Vorweg X ausgeführt werden.

Der Stößel 32 wirkt gegen die Kraft einer Rückstellfeder 34 auf einen Bremskraftverstärker 40, in dem in üblicher Weise eine Bremskraftverstärkung stattfindet. Links in Fig. 2 sind der Bremsflüssigkeitsbehälter 44 und der Bremszylinder 42 sowie zwei Bremsleitungen B dargestellt.

Beim Betätigen des Bremspedals 14 wird also zunächst einmal lediglich das elektrische Wegsignal von dem Weggeber-Potentiometer 16 erzeugt, ohne daß sich der Stößel 32 bewegt. Damit ist während des Bremspedal-Vorweges X lediglich die elektrische oder elektronische Bremseinrichtung aktiviert. Der Weg X ist hier auf 50 % des gesamten Pedalwegs eingestellt. Andere Werte sind möglich. Erst wenn dieser Bremspedal-Vorweg durchlaufen ist, bewegt sich der Stößel 32, so daß dann die konventionelle mechanisch-hydraulische, Bremse betätigt wird.

Fig. 4 zeigt den Zusammenhang zwischen Bremskraft bzw. Bremsmoment und Bremspedalweg. Wenn, wie oben erläutert wurde, das Bremspedal bis 50 % des maximalen Bremspedalwegs durchgedrückt wird, erfolgt lediglich eine elektrische bzw. elektronische Steuerung des Bremsvorgangs. Dies entspricht der Kurve "1" in Fig. 4. Erst anschließend wird bei weiterem Durchdrücken des Bremspedals 14 die mechanisch-hydraulische Bremseinrichtung betätigt. Dies entspricht der in Fig. 4 dargestellten rechten, ausgezogenen Linie.

Aus Fig. 4 ist ersichtlich, daß die durch die elektrische Bremsung erreichte Bremskraft 100 % der verfügbaren Bremskraft bereitstellen kann. Diese Bremskraft wird also durch den generatorischen Betrieb der Elektromotoren 6a...6d und durch den Betrieb der Wirbelstrombremsen 18a...18d erreicht. Die Energie für die Wirbelstrombrensen 18a...18d kann direkt die durch den Generatorbetrieb der Elektromotoren 6a...6d gewonnene elektrische Energie sein. Alternativ oder zusätzlich kann die Energie auch von der VGE 10 und/oder von dem Akkumulator 14 für die Wirbelstrombremsung bereitgestellt werden. Zum Vergleich ist in Fig. 4 mit "2" der Verlauf der Bremskraft in Abhängigkeit des Bremspedalwegs dargestellt für eine herkömmliche mechanisch-hydraulische Bremsanlage.

## Patentansprüche

1. Nicht-spurgebundenes Fahrzeug (2) mit mindestens einem Elektromotor (6), der das Fahrzeug (2) antreibt und über eine Leistungselektronik-Einheit (8) von einem elektrischen Generator (10) und/oder einem elektrischen Speicher (11) mit Strom gespeist wird, mit einer Steuerung (12), und mit einer mittels Bremspedal (14) betätigten Bremsanlage (20), ferner mit einem Verzögerungssensor (16) zum Erkennen eines Abbremsens des Fahrzeugs (2), wobei bei abbremsendem Fahrzeug der Elektromotor (6a...6d) von der Steuerung (12) als Generator geschaltet wird und die Steuerung (12) bei Vorhandensein eines elektrischen Speichers (11) die von dem Elektromotor (6a...6d) im Generatorbetrieb gelieferte Energie über die Leistungselektronik-Einheit (8) zu einem Teil als Nutzenergie zum Aufladen des elektrischen Speichers (11) bereitstellt,
dadurch gekennzeichnet,
daß die Nutzenergie von der Steuerung (12) darüber hinaus bereitgestellt wird
a) zum Antrieb von Nebenaggregaten, insbesondere Lüfter, Kühlmittelpumpe, Klimaanlagen-Kompressor oder dergleichen, oder/und
b) zum Heizen des Fahrgastraums, oder/und
c) zum Versorgen elektrischer Verbraucher wie Licht, heizbare Heckscheibe oder dergleichen.

2. Fahrzeug nach Anspruch 1,
dadurch gekennzeichnet,
daß für den Antrieb eine Verbrennungsmotor-Generator-Einheit (10) vorgesehen ist.

3. Fahrzeug nach Anspruch 2,
dadurch gekennzeichnet,
daß zum Heizen des Fahrgastraums elektrische Widerstände in den Kühlkreislauf des Verbrennungsmotors integriert sind.

4. Fahrzeug nach einem der Ansprüche 1 bis 3,
dadurch gekennzeichnet,
daß der Verzögerungssensor einen vorzugsweise mit dem Bremspedal (14) gekoppelten Stellungssensor, insbesondere ein Potentiometer (16) aufweist, das an die Steuerung (12) angeschlossen ist.

5. Fahrzeug nach einem der Ansprüche 1 bis 4,
dadurch gekennzeichnet,
daß der Verzögerungssensor einen Drosselklappenstellungssensor aufweist.

6. Fahrzeug nach einem der Ansprüche 1 bis 5,
dadurch gekennzeichnet,
daß zusätzlich zu einer mechanisch-hydraulischen Bremsanlage eine elektrische Wirbelstrombremsanlage (18a...18d) vorgesehen ist, die bei einem Bremsvorgang von dem im Generatorbetrieb arbeitenden Elektromotor (4a...4d) gespeist wird.

7. Bremseinrichtung in Verbindung mit einer elektrisch oder elektronisch gesteuerten Bremsanlage, mit einem elektrischen Bremspedal-Weggeber (16) und mit einer elektronisch gesteuerten Bremsmomenteinstellung, wobei die Bremseinrichtung mechanisch mit einem Bremskraftverstärker (40) einer mechanisch-hydraulischen Bremsanlage gekoppelt ist, insbesondere für ein nicht-spurgebundenes Fahrzeug nach einem der Ansprüche 1 bis 6,
dadurch gekennzeichnet,
daß der elektrische Bremspedal-Weggeber (16) auf einen Bremspedal-Vorweg (X) anspricht und für die elektronisch gesteuerte Bremsmomenteinstellung ein Führungssignal liefert, und im Anschluß an den Bremspedal-Vorweg (X) die mechanisch-hydraulische Bremsanlage anspricht.

8. Bremseinrichtung nach Anspruch 7,
dadurch gekennzeichnet,
daß an das Bremspedal (14) ein wegabhängig arbeitendes mechanisches Widerstandselement (24, 22) gekoppelt ist.

9. Bremseinrichtung nach Anspruch 8,
dadurch gekennzeichnet,
daß das Widerstandselement ein Hysterese-Element (22) aufweist, das insbesondere als Reibungsgglied ausgebildet ist.

10. Bremseinrichtung nach einem der Ansprüche 7 bis 9,
dadurch gekennzeichnet,
daß die elektronisch gesteuerte Bremsanlage für 100 % des maximalen Bremsmomentes bzw. der maximalen Bremskraft ausgelegt ist.
